# EUROPÄISCHE PATENTANMELDUNG

(11) **EP 1 489 270 A1**
(43) Veröffentlichungstag der Anmeldung: **22.12.2004**
(21) Anmeldenummer: 04011062.9
(22) Anmeldetag: 10.05.2004
(51) Int. Cl.: F01K 17/02, F01K 13/02

(54) **Anlage zur Erzeugung von Regelenergie**

(30) Priorität: 13.05.2003 DE 10321651
(71) Anmelder: Rasche, Klaus, D-04277 Leipzig (DE)
(72) Erfinder: Rasche, Klaus, 04277 Leipzig (DE); Vollrath, Otto, 06116 Halle/Saale (DE)
(74) Vertreter: Müller, Volkmar

(57) **Zusammenfassung**

Die Erfindung betrifft eine Anlage zur Erzeugung von Regelenergie für elektrische Netze, mit zumindest einer Wärme-Kraft-Kopplungsanlage (WKK), wobei die Anlage in einem ersten Schaltzustand beide in der Wärme-Kraft-Kopplungsanlage erzeugten Energieträger, nämlich Heizwasser und den im Generator der Wärme-Kraft-Kopplungsanlage erzeugten Heizstrom, ausschließlich zur Wärmeversorgung der angeschlossenen Wärmebedarfsträger (6.1-6.4) nutzt, zumindest eine vom Heizstrom angetriebene Wärmepumpe (3) zum Einsatz kommt und die Anlage autark betrieben wird, und wobei die Anlage in einem zweiten Schaltzustand durch Abschalten zumindest einer Wärmepumpe (3) den in diesem Generator der Wärme-Kraft-Kopplungsanlage erzeugten Heizstrom als Regelenergie in ein Elt-Netz einspeist.

## Beschreibung

Die Erfindung betrifft eine Anlage zur Erzeugung von Regelenergie.

Aus dem Stand der Technik sind unterschiedliche Anlagen zur Erzeugung von Regelenergie bekannt. Als solche lassen sich beispielsweise Wasserkraftwerke und Gasturbinenkraftwerke einsetzen.

Aus einer Veröffentlichung der Firma RAG Saarberg AG mit dem Titel "Die Herrscher über Watt und Volt" von Herrn Franz- Josef Blug im Gespräch mit Herrn Andreas Brabeck ist u.a. bekannt:
Indikator für ein stabiles Stromnetz ist die Netzfrequenz von genau 50 Hertz. Die diesbezüglich tolerierbare Schwankungsbreite liegt zwischen 49,98 und 50,02 Hz. Netzbelastungen durch die Verbraucher und Einspeisungen durch die Erzeuger müssen stets ausgeglichen sein, um innerhalb dieser Schwankungsbreite zu bleiben.
Damit dies überhaupt steuerbar ist, ist Deutschland in sogenannte Regelzonen eingeteilt. Regelenergie ist, auch im Sinne der Erfindung, diejenige Energie, die ein Netzbetreiber kurzfristig zur Verfügung haben muss, um Abweichungen zwischen Einspeise- und
Entnahmeplänen (Fahrpläne) und der tatsächlichen Entnahme und Einspeisung auszugleichen. Es wird dabei regelmäßig zwischen Primärregelenergie und
Sekundärregelenergie unterschieden.
Die Primärregelung im vorgenannten Sinne erfolgt im zusammengeschalteten synchronbetriebenen Drehstrom - Verbundnetz (elektrische Netze). Die angeschlossenen Kraftwerksbetreiber betreiben aus diesem Grund ihre Kraftwerke im laufenden Betrieb üblicherweise gedrosselt. In Sekundenschnelle, d.h. innerhalb von ca. 1 bis 15 Sekunden, können Dampfreserven in die Turbinen eingespeist werden und setzen dort zusätzliche elektrische Leistung frei, so dass entsprechende Regelenergie zur Verfügung steht.

Diese Primärregelung hält aber nur wenige Sekunden vor und wird von Sekundärregelungskapazitäten üblicherweise abgelöst. Nach etwa 15 Minuten greift diese sogenannte Minutenreserve der Regelenergie, die die nächsten 15 bis 30 Minuten überbrückt. Dieser sogenannte Minutenmarkt funktioniert grundsätzlich folgendermaßen: Am Vortag werden vom Netzbetreiber Angebote für diese Minutenreserve eingeholt und entsprechende Verträge abgeschlossen. Der Kraftwerksbetreiber, der den Zuschlag für diese Minutenreserve erhält, hält diese Leistungskapazität in Bereitschaft und wird bereits für diese Bereitschaft vom Netzbetreiber vergütet. Wird dann diese Minutenreserve tatsächlich angefordert, erfolgt dies mit einem Vorlauf von mindestens 7 Minuten. In dieser Zeit ist beispielsweise die Firma RAG Saarberg AG in der Lage, die Gasturbine im Kraftwerk Ferne auf die geforderte Leistung hochzufahren.

Solche Gasturbinenkraftwerke haben Wirkungsgrade von 35% bis 42%. Bei dem beschriebenen Spitzenlasteinsatz zur Erzeugung von Regelenergie liegt der Wirkungsgrad eher bei 35%, weil die Gasturbine in Erwartung ihres möglichen Einsatzes im Leerlauf betrieben oder warmgehalten wird.

Der RWE-Net-Vorsitzende Herr Wolfgang Kösser erklärt im Jeverschen Wochenblatt vom 01.07.2002: "Vor allem der Ausbau der Windenergie wird den Regelenergiebedarf in Zukunft noch weiter in die Höhe treiben. Bei der Regelenergie sind sehr kurze Zugriffszeiten für diese Leistung gefordert. Nicht alle Kraftwerke können so schnell einspringen. Dafür eignen sich vor allem Wasserkraftwerke und Gasturbinenkraftwerke. Der Netzbetreiber RWE -Net hat für Regelenergie schon mehr als 300 Mio. DM - Tendenz steil steigend - ausgegeben."

Es besteht somit derzeit ein Bedarf an geeigneten Anlagen zur Erzeugung von Regelenergie, die insbesondere einen höheren Wirkungsgrad als diesbezügliche bekannte Anlagen besitzen.

Nach Netzzusammenbrüchen sind außerdem zum Wiederaufbau der elektrischen Netze (Elt-Netze) inselbetriebsfähige Erzeugeranlagen gefragt.

Aufgabe der Erfindung ist es, eine Anlage zur Erzeugung von Regelenergie bereitzustellen, die einen höheren Wirkungsgrad besitzt.

Die Aufgabe der Erfindung wird durch eine Anlage gemäß Anspruch 1 gelöst.
Diese erfindungsgemäße Anlage zur Erzeugung von Regelenergie für elektrische Netze besitzt zumindest eine Wärme-Kraft-Kopplungsanlage (WKK), wobei die Anlage in einem ersten Schaltzustand beide in der Wärme-Kraft-Kopplungsanlage erzeugten Energieträger, nämlich Heizwasser und Heizstrom, ausschließlich zur Wärmeversorgung der angeschlossenen Wärmebedarfsträger nutzt, wobei zumindest eine vom Heizstrom angetriebene Wärmepumpe zum Einsatz kommt und die Anlage autark betrieben wird, und wobei die Anlage in einem zweiten Schaltzustand, d.h. u.a. Abschalten zumindest einer Wärmepumpe, den in einem Generator der Wärme-Kraft-Kopplungsanlage erzeugten Heizstrom als Regelenergie in ein Elt-Netz einspeisen kann.
Insbesondere wird eine Anlage, die grundsätzlich gemäß einem Verfahren, welches in der DE 41 13 071 beschrieben ist, erfindungsgemäß verwendet.
Der von der Wärme-Kraft-Kopplungsanlage (WKK)erzeugte Heizstrom ist auch für die Einspeisung von Elektroenergie als Regelenergie in ein Elt-Netz nutzbar. Die erfindungsgemäße Anlage ist grundsätzlich außerdem als Netzersatzgerät oder zur Inselbetriebsfahrweise verwendbar.
Die Anlage zur Energieerzeugung wird im ersten Schaltzustand autark, d.h. getrennt vom Elt-Netz, betrieben. Der Heizstrom einer herkömmlichen Anlage, beispielsweise gemäß DE 41 13 071, hat aber noch nicht die geforderte Qualität, um als Elektroenergie in das Elt-Netz eingespeist werden zu können. So entspricht die Frequenz des Heizstromes nicht den Netzanforderungen von ± 0,02 Hz. Auch die Spannung des Heizstromes ist an die Netzspannung anzugleichen. Gelöst wird das, indem mit einer zusätzlichen Regelung in Form des Transferbausteines 9 sowohl die Spannung des Heizstromes wie auch die Frequenz des Heizstromes an das Niveau des Netzstromes angepasst werden. Wenn das erreicht ist, wird der Wärmetrans - Heizstrom über bekannte Synchronisiereinrichtungen 8 und den Leistungsschalter 7 synchron zum Netz geschaltet. Das ist noch nicht mit Leistungslieferung an das Netz verbunden. Damit weder Leistungsbezug aus dem Netz noch Leistungslieferung in das Elt - Netz erfolgen können, erfolgt im Bereich des Leistungsschalters 7 eine Leistungsmessung. Der Wärmetrans-Baustein regelt nun die Leistung des BHKW so, dass am Leistungsschalter 7 zu jedem Zeitpunkt die Leistung gleich ±0 ist. Damit ist aber die Bereitschaft gegeben, sekundenschnell auf Anforderung Regelenergie an das elektrische Netz zu liefern. Nun kann der Netzbetreiber selbst über den Zeitpunkt der Zuschaltung der Heizstromleistung bzw. Regelenergie entscheiden. Wird nun die Einspeisung von Regelenergie erwünscht, erteilt der Elt - Netzbetreiber dem Wärmetransbaustein den Auftrag, die Wärmepumpen 3 abzuschalten, das BHKW1.1 auf volle Leistung hochzufahren und es werden die Ersatzleistungen 1.2 für die Wärmepumpenleistung angefahren. Diese Ersatzleistungen können zusätzliche Kesselanlagen sein, es können aber auch Wärmespeicher sein. Für die Größe der einzuspeisenden Regelleistung ist es aber günstiger, als Ersatzleistung für die Wärmepumpen Wärme-Kraft-Kopplungsanlagen, also z.B. BHKW oder Brennstoffzellen 1.2 einzusetzen. Diese damit über Wärme-Kraft- Kopplung mit hohem Wirkungsgrad erzeugte Elektroenergie wird dann ebenso als Regelenergie in das Elt-Netz eingespeist.
Während die als Heizstrom aus der Wärmetrans einzuspeisende Regelenergie sekundenschnell zur Verfügung steht, weil das BHKW ja mit Leistung bereits in Betrieb ist, müssen die Ersatzanlagen für die Wärmepumpen erst angefahren werden und die daraus einzuspeisende Regelenergie steht mit einer Verzögerung von max. 5 Minuten zur Verfügung.

Bei der Abschaltung der Einspeisung von Regelenergie wird dann rückwärts wie folgt verfahren:
- Abschaltung auf Veranlassung des Netzbetreibers, Trennen vom Elt-Netz durch Ausschalten des Leistungsschalters 8
- Zeitgleich werden die zusätzlichen Erzeugereinheiten 3, die als Ersatz für die Wärmepumpen dienten, abgeschaltet und zurückgefahren
- die Wärmepumpen werden über ein gesondertes Programm wieder angefahren. Das gesonderte Programm ist erforderlich, weil hohe Anlaufströme für den Verdichter auftreten.

Ein elektronischer Wärmetrans - Baustein 9 übernimmt die gesamte zentrale Steuerung:
- Anpassung von Frequenz und Spannung des Heizstromes an die Qualität des Elt-Netzes
- Einleitung der Synchronisation zum Elt-Netz und Abgabe der Bereitschaftserklärung zur Regelenergielieferung
- Abfahren der Wärmepumpen
- Anfahren der Wärmepumpenersatzleistung
- Sicherung einer geordneten Wärmeversorgung während des Prozesses der Umstellung auf Regelenergielieferung

Die Wärmetrans an sich setz schon eine komplizierte Regelungstechnik voraus , weil beide Produkte aus der Wärme-Kraft-Kopplung, das Heizwasser und der Heizstrom zeitgleich erzeugt und auch wieder zeitgleich vollständig verbraucht werden müssen, und das bei Einhaltung der Qualitätsforderungen an die Wärmeversorgung. Die Einspeisung von Heizstrom als Regelenergie in das Elt-Netz wird über einen Steuerimpuls oder anderweitig von einer Regelenergiezentrale aus von der Wärmetrans-Anlage abgefordert.
Der Wärmetrans -Regelbaustein 9 in seiner einfachen Ausführung übernimmt diesen Impuls und setzt ihn in der Wärmetrans -Anlage multivalent um:
- er schaltet die Wärmepumpen ab
- er fährt die Wärmepumpen-Ersatzleistung an und überwacht diesen Vorgang
- er fährt die Wärmepumpen in erneute Anfahrtbereitschaft und überwacht dies.

Diese einfache Regelung des Wärmetrans-Bausteins führt in der Phase der Umstellung auf Regelenergielieferung zu Schwankungen der Heizwasser-Umwälzmengen und der Temperaturen. Erst nach einer gewissen Zeit der Einpegelung tritt wider stabiler Regelbetrieb der Wärmetrans ein.

Um die Beeinträchtigung der Qualität der Wärmeversorgung während solcher Phasen der Umstellung zu minimieren, wird der Wärmetrans-Baustein "intelligent" gemacht. Über Softwareprogramme kombiniert mit der Erkennung von Trend-Entwicklungen bestimmter Messwerte erkannt der Wärmetrans -Regelbaustein die Schwankungen von Mengenströmen und Temperaturen im Voraus und steuert so dagegen, dass die Zeiten bis zu einem stabilen Regelbetrieb nach Umstellphasen minimiert werden. So wird beispielsweise beim abruptem Abschalten der Wärmepumpen ein Kurzschlussventil zur Umgehung derselben geöffnet, womit die Mengenstromschwankungen minimiert werden. Die fehlende Leistung führt aber notgedrungen zum Abfallen der Heizwasser-Vorlauftemperaturen. Das wissend, steuert der Wäremtrans-Regelbaustein die Leistung des BHKW vorsorglich mit dem Abschalten der Wärmepumpen hoch und fährt dieses sodann in Erkennung der Trendentwicklung der Heizwasser-Vorlauftemperatur leistungsmäßig wieder zurück.

Die Regelenergie aus der vorbeschriebenen Anlage "Wärmetrans" ist dadurch charakterisiert, dass sie regelmäßig nur mit relativ geringen Leistungen von derzeit max. 400 kW in das Netz einspeisen kann. Es werden daher in einer Wärmetrans-Zentrale alle Wärmetrans-Anlagen eines größeren territorialen Gebietes zusammengefasst. Sie können von dieser Zentrale aus angesteuert werden. Diese Anlagen können alle zeitgleich oder auch anderweitig gestaffelt dem Elt-Netz zugeschaltet werden, so dass die dem Netzbetreiber von der Wärmetrans-Zentrale angebotene Regelenergie der Summe der Leistungen der zusammengefassten Wärmetrans-Anlagen entspricht. Dem Netzbetreiber kann damit eine für seine Regelungsaufgabe respektable Leistungsgröße im MW-Leistungsbereich angeboten werden.
Da die Wärmetrans eine eigene Leistungs- Spannungs- und Frequenzregelung mit den notwendigen Anforderungen besitzt, ist sie auch als Netzersatzgerät beispielsweise in Krankenhäusern geeignet. Bei Elt - Netz - Ausfall wird der Heizstrom über den Leistungsschalter 7 dem Krankenhaus- Elt - Netz zugeschaltet. Weil der Heizstrom zur Bedarfsdeckung nicht ausreichen wird, gehen auch die Wärmepumpen außer Betrieb und das Ersatz - BHKW geht in Betrieb. Diese Gesamtregelung übernimmt ebenfalls der Wärmetrans - Baustein.
Der Betrieb der Wärmetrans entspricht, weil die Wärmetrans autark betrieben wird, einem Inselbetrieb mit hoher Regelqualität für elektrische Spannung ,Leistung und Frequenz. Bei Ausfall übergeordneter Elt - Netze steht die Wärmetrans daher als Inselbetrieb für Maßnahmen des übergeordneten Netzbetreibers zum Wiederaufbau des Elt - Netzes zur Verfügung.
Regelenergie aus Wärmetrans hat folgende Vorteile:
- Regelenergie aus Wärmetrans ist Wärme-Kraft-Kopplungsleistung und hat einen Wirkungsgrad von etwa 90 %. Derzeit eingesetzte Gasturbinenkraftwerke haben einen Wirkungsgrad von nur 35% bis 42%, Pumpspeicherwerke haben einen Wirkungsgrad von etwa 65%.
- Die Regelenergie aus Wärmetrans wird im zweiten Schaltzustand aus Elt-Erzeugungsanlagen eingespeist, die vor und nach der Regelenergieeinspeisung ebenfalls nutzbringend für die Wärmetrans im ersten Schaltzustand mit hohen Brennstoffeinsparungen betrieben werden.

Das Verfahren zur Wärmeversorgung, beispielsweise bekannt aus der DE 197 08 164 A1 und DE 41 13 071 C2, bei der beide in einer Wärme - Kraft - Kopplungsanlage erzeugte Energieträger, nämlich Heizstrom und Heizwasser, zur Wärmeversorgung eingesetzt werden, wird als Wärmetransformation bzw. kurz als Wärmetrans bezeichnet.

Die Aufgabe der Erfindung wird weiterhin durch eine Anlage gemäß Anspruch 5 und ein Verfahren gemäß Anspruch 6 gelöst.

Im folgenden soll die Erfindung anhand eines Ausführungsbeispieles näher erläutert werden. Es zeigt:

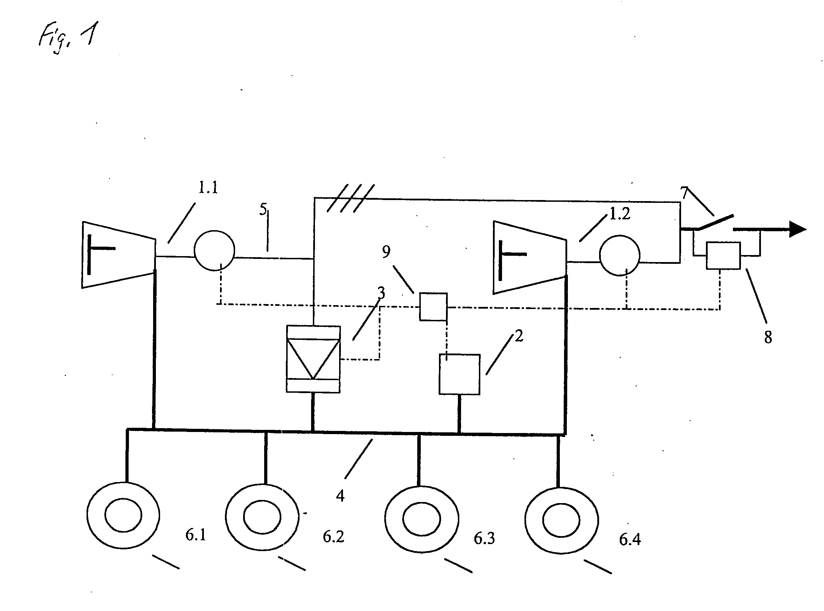

- Figur 1: eine Anlage zur Wärmeversorgung und zur Erzeugung von Regelenergie.

Die Wärmetransformation ist mit dem BHKW 1. 1 in Betrieb und versorgt über die Heiz-stromleitung 5 die Wärmepumpe 3 mit Heizstrom. Mit der thermischen Leistung des BHKW 1.1, der thermischen Leistung der Wärmepumpe 3 und der Leistung des Kessel 2 werden die Wärmeabnehmer 6.1 bis 6.4 über die Heizwasserleitung 4 mit Wärme versorgt.
Um nun die Bereitschaft zur Regelstromlieferung herzustellen, regelt der Wärmetrans-Baustein 9 die Spannung und die Frequenz des Heizstromes auf das Niveau des Elt-Netzes.
Danach erfolgt mit dem Synchronisationsgerät 8 die Synchronisation des Heizstromes zum Elt-Netz und der Leistungsschalter 7 wird zugeschaltet. Der Wärmetrans - Baustein 9 regelt nun mit Hilfe einer Leistungsmessung im Bereich des Leistungsschalters 7 Leistungslieferung bzw. -bezug an das bzw. vom Elt - Netz auf ± 0. Die Wärmetrans ist nach wie vor wie gehabt in Betrieb, es besteht aber nun die Bereitschaft, den Heizstrom sekundenschnell als Regelenergie in das Elt - Netz zu liefern. Auf Verlangen kann nun automatisch dem Netzbetreiber mitgeteilt werden, dass diese Bereitschaft gegeben ist. Über Fernsteuerung kann der Netzbetreiber nunmehr diese Leistung mit seinen oben beschriebenen Befehlen an den Wärmetrans - Baustein 9 abfordern. In demselben Augenblick wird vom Wärmetrans-Baustein 9 die Wärmepumpen 3 abgeschaltet, so dass diese keinen Heizstrom mehr beziehen. Der nach wie vor in gleicher Höhe vom BHKW 1. 1 erzeugte Strom geht in das Elt-Netz. Das BHKW wird auf volle Leistung hochgefahren, sofern es das nicht schon ist. Der Wärmetrans-Baustein 9 überwacht sodann das ordnungsgemäße Abfahren der Wärmepumpen 3 und versetzt diese in den Zustand der erneuten Zuschaltbereitschaft. Zeitgleich wird vom Wärmetrans-Baustein 9 die Ersatzleistung für die Wärmepumpen 3 - hier ein weiteres BHKW 1.2 - angefahren. Dieser Anfahrvorgang wird vom Wärmetrans-Baustein 9 überwacht, Spannung und Frequenz werden an das Netz angeglichen. Danach wird auch diese Leistung über das Synchronisiergerät zum Elt-Netz synchronisiert und nach einer Zeit von etwa 5 Minuten ebenfalls über einen eigenen Leistungsschalter des BHKW 1.2 dem Netz zugeschaltet.
Umgekehrt überwacht der Wärmetrans - Baustein 9 die Abschaltung der Regelenergie vom Elt - Netz und die ordnungsgemäße Wiederinbetriebnahme der Wärmetrans, die Anlage befindet sich danach wieder im ersten Schaltzustand.

### Zahlenbeispiel:

- Wärmeleistungsbedarf eines Krankenhauses 1.000 kW
- Leistung der Wärmetransformation 500 kW
- Auslegung des BHKW
   - thermische Leistung 130 kW
   - elektrische Leistung 92,5 kW
- Auslegung der Wärmepumpen
   - Leistungszahl α = 4
   - thermische Leistung 370 kW
   - elektrische Leistung 92,5 kW
- Kesselleistung zur Deckung der Wärmespitze 500 kW
- BHKW - Leistung als Ersatz für Wärmepumpenleistung
   während der Spitzenstromeinspeisung
   - thermische Leistung 370 kW
   - elektrische Leistung 260 kW

Die 92,5 kW waren zum Zeitpunkt der Abforderung der Regelenergie als Heizstrom bereits in Betrieb (erster Schaltzustand der Anlage) und sind so sekundenschnell zuschaltbar. Die 260 kW werden zum Zeitpunkt der Abforderung der Regelenergie als Ersatz für die thermische Leistung der Wärmepumpen angefahren und werden 5 Min später dem Netz zugeschaltet.

Bei der Wärmetrans, d.h. die Anlage befindet sich im ersten Schaltzustand, wird erfindungsgemäß keine Elektroenergie mehr in das Elektroenergienetz (Elt-Netz) eingespeist. Das Verfahren der Wärmetransformation ist dann autark und der insgesamt erzeugte Heizstrom wird in der Regel wieder vollständig zur Wärmeversorgung genutzt. Es findet in diesem Schaltzustand weder ein Strombezug vom noch eine Stromlieferung an das Elt-Netz statt.
Mit der Anlage soll es im zweiten Schaltzustand ermöglicht werden, den im BHKW erzeugten Heizstrom für eine bestimmte kürzere Zeit als Regelenergie in das Elt-Netz einzuspeisen, ihn als Netzersatzleistung z.B. in Krankenhäusern zu nutzen oder ihn als Inselbetriebsnetze bei Netzausfall zum Wiederaufbau des Netzes zu nutzen.

## Patentansprüche

1. Anlage zur Erzeugung von Regelenergie für elektrische Netze, mit zumindest einer Wärme-Kraft-Kopplungsanlage (WKK), wobei die Anlage in einem ersten Schaltzustand beide in der Wärme-Kraft-Kopplungsanlage erzeugten Energieträger, nämlich Heizwasser und den im Generator der Wärme-Kraft-Kopplungsanlage erzeugten Heizstrom, ausschließlich zur Wärmeversorgung der angeschlossenen Wärmebedarfsträger nutzt, zumindest eine vom Heizstrom angetriebene Wärmepumpe zum Einsatz kommt und die Anlage autark betrieben wird, und wobei die Anlage in einem zweiten Schaltzustand durch Abschalten zumindest einer Wärmepumpe den in diesem Generator der Wärme-Kraft-Kopplungsanlage erzeugten Heizstrom als Regelenergie in ein Elt-Netz einspeist.

2. Anlage nach Anspruch 1 **dadurch gekennzeichnet, dass** als Wärmeersatzleistung für die abgeschaltete Wärmepumpe eine Kesselanlage und/oder ein Wärmespeicher einsetzbar sind.

3. Anlage nach Anspruch 1 **dadurch gekennzeichnet, dass** als Wärmeersatzleistung für die abgeschaltete Wärmepumpe zumindest eine Wärme-Kran-Kopplungsanlage zum Einsatz kommt, die zusätzlich Regelenergie liefert.

4. Anlage nach Anspruch 1 **dadurch gekennzeichnet, dass** die Anlage einen Wärmetrans-Baustein besitzt, welcher die multivalente Umsetzung der von einer Zentrale , insbesondere über einen Impuls abgeforderte Regelenergie in den zweiten Schaltzustand sekundenschnell einleitet und über eine intelligente Software eine hohe Qualität der Regelenergie- und Wärmeenergielieferung gewährleistet.

5. Anlage zur Einspeisung von Regelenergie in Elt-Netze, die zumindest eine Anlage gemäß der Ansprüche 1 bis 4 sowie zumindest eine Zentrale, von der die zentrale Abforderung der Regelenergie erfolgt und mit der Anlage bzw. den Anlagen kommuniziert, besitzt.

6. Verfahren zur Einspeisung von Regelenergie in elektrische Netze, bei dem als Anlagen der Wärmeversorgung der erzeugte Heizstrom als Regelenergie in das Elt-Netz eingespeist wird.
